# EUROPEAN PATENT SPECIFICATION

(11) **EP 3 647 005 B1**
(45) Date of publication and mention of the grant of the patent: **17.02.2021**
(21) Application number: 19203845.3
(22) Date of filing: 17.10.2019
(51) Int. Cl.: B27G 19/02, B27B 5/22, B23D 47/12, B27B 5/38, B27B 5/10

(54) **TRUNK SAWING MACHINE**
STAMM-SÄGEMASCHINE
BANC DE SCIE POUR TRONCS

(30) Priority: 31.10.2018 IT 201800009977
(43) Date of publication of application: 06.05.2020
(73) Proprietor: Ricca Andrea & C. S.n.c., 12022 Busca (Cuneo) (IT)
(72) Inventor: RICCA, Ms. Roberta, I-12022 Busca (Cuneo) (IT)
(74) Representative: Buzzi, Franco

(56) References cited:
- GB-A- 703 191
- US-A- 4 539 877

## Description

### Field of the invention

The present invention refers to a trunk sawing machine according to the preamble of claim 1, with a rotary saw disc actuated by means of a motor-driven driving shaft, a driven shaft and a belt drive between the driving shaft and the driven shaft.

### State of the prior art

Over the years, the Applicant has been manufacturing and selling trunk sawing machines thus made comprising a swinging cradle structure displaceable orthogonally to the saw disc from an inoperative receded position towards a cutting advanced position in which the saw disc is exposed for progressively cutting the trunk.

In some applications, such trunk sawing machines do not have an independent motor for the actuation of the saw disc and the driving shaft is driven in rotation by means of a universal joint actuated by a tractor power take-off.

When using such trunk sawing machines there arises the problem related to safeguarding the safety of the operator, with regard to risk of injuries that could occur when the disc is driven in rotation to cut the trunk. For this reason, provided for in the prior art are safety systems arranged to stop the rotation of the disc irrespective of the rotary motion of the universal joint of the tractor.

However, such safety systems provide for braking means which act directly on the belt of the aforementioned transmission wearing it out and thus jeopardising the use thereof over time.

The United Kingdom patent application n° GB 703191A discloses a trunk sawing machine according to the preamble of claim 1, wherein the saw is provided with a safety system for stopping the saw disc. Such disc is rotatably integrally joined to a pulley actuated by means of a belt-drive pulley connected to the tractor power take-off. The drive pulley can be moved axially by means of a lever system that can be actuated by means of a pedal to loosen the tension of the belt thus interrupting the transmission of motion to the saw disc. A band brake is provided for stopping the disc. Such brake can be activated by means of a second swinging lever system connected to the pedal. Such system is complex to obtain especially as concerns the swinging lever system required to stop the saw disc. Furthermore, providing for an axially moveable pulley could create malfunctions during use.

The United States patent application n° US 4539877A regards a trunk sawing machine in which the saw disc connected to the shaft is actuated by a transmission comprising a belt and a shaft connected to the tractor power take-off. Provided for is a safety device for stopping the saw disc comprising a belt tightener that can be actuated manually by means of a lever for disengaging the propeller shafts. Furthermore, the lever can be used to actuate a brake of the saw disc, technically poorly functional, comprising a non-rotating pulley that can be translated axially to brake - by friction - a belt driven by a pulley integrally joined to the shaft. Such system is ineffective and potentially dangerous for an operator in that the belt of the brake, during the normal use of the trunk sawing machine, moves constantly.

### Summary of the invention

The object of the present invention is to overcome the aforementioned drawbacks, and provide an improvement for trunk sawing machines thus made capable of allowing not to wear out the drive belt following an emergency stop of the saw disc.

Such object is obtained by a trunk sawing machine as defined in claim 1.

According to the invention, the belt drive comprises a belt tightener that can be displaced - by means of a lever - between an advanced position in which it confers a tension to the belt sufficient for the driven shaft to be driven in rotation by the driving shaft, and a belt non-tensioning receded position in which it slides with respect to at least one of the two shafts interrupting the actuation of the driven shaft and thus no longer transmitting the rotary motion to the saw disc.

According to an aspect of the invention, such safety device comprises a band brake that can be actuated by means of the aforementioned lever. Such band brake is provided for braking the driven shaft, up to the complete stop of the saw disc so that the motor-driven actuation of the disc can be stopped with a single manual action and it can be stopped within the least time possible and without wearing out the critical components of the transmission of the trunk sawing machine. According to the invention, such driven shaft comprises a rotating element on which the band brake, which can be actuated manually by means of the lever, acts.

In this manner, the transmission of the motion between the driving shaft can be interrupted by means of a single manual action and simultaneously act on the brake provided for stopping the saw disc which could otherwise continue rotating by inertia.

### Brief description of the drawings

The invention will now be described in detail with reference to the attached drawings, provided purely by way of non-limiting example, wherein:
- figure 1 is a lateral elevational schematic perspective view of an embodiment in an operative condition of the trunk sawing machine according to the invention wherein the safety device is not activated,
- figure 2 is a view similar to figure 1 in which the safety device was activated,
- figure 3 is a lateral elevational perspective view - in larger scale - of a part of the trunk sawing machine according to the embodiment of figures 1 and 2 in which the safety device is not activated,
- figure 4 is a view similar to that of figure 3 in which the safety device was activated,
- figure 5 is a lateral elevational schematic perspective view of an alternative embodiment of the trunk sawing machine not according to the invention in an operative condition in which the safety device was activated,
- figure 6 is a lateral elevational perspective view - in larger scale - of a part of the trunk sawing machine according to the embodiment of figure 5 in which the safety device is activated.

### Detailed description of the invention

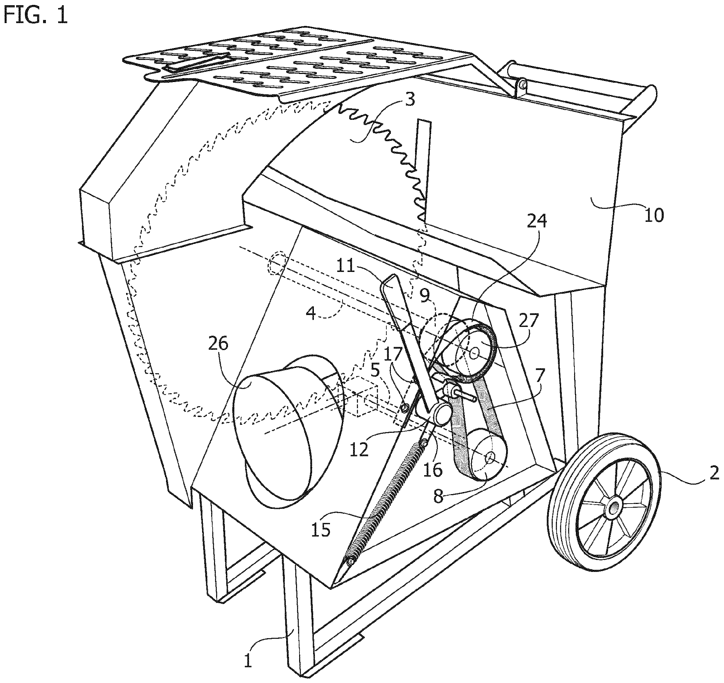

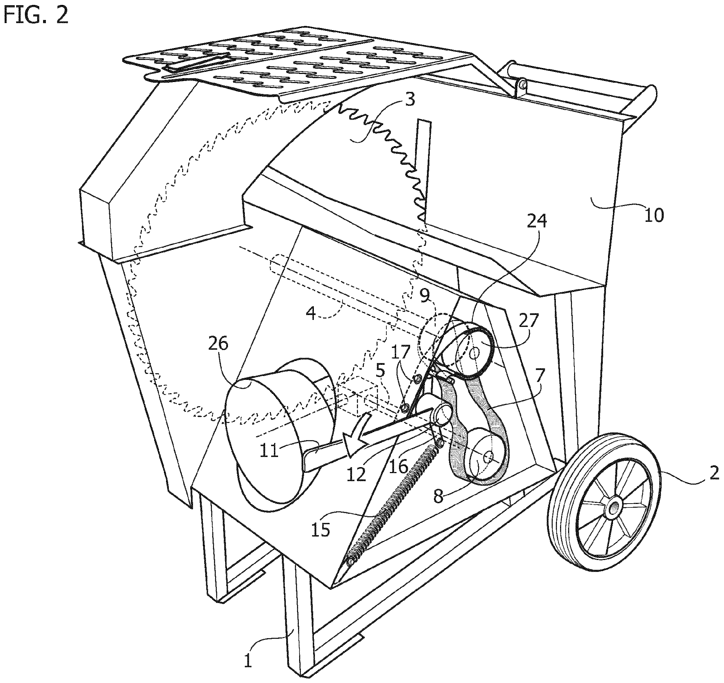

Figures 1 and 2 schematically illustrate a trunk sawing machine according to the invention in two different operative conditions to be addressed hereinafter. Given that the machine is of the generally conventional type, only the essential components and the components expressly referred to in the invention will be described.

The trunk sawing machine comprises a framework 1 with wheels 2 at whose upper part a saw disc 3 - driven in rotation by a driven shaft 4 - rotates around a horizontal axis.

In this embodiment of the trunk sawing machine, the driven shaft 4 is actuated by a driving shaft 5 rotatably connected to a universal joint, not visible in the figures, coupled to a tractor power take-off, also not visible in the figures. The actuation of the driven shaft 4 by the driving shaft 5 is obtained by means of a belt drive 7, 8, 9 comprising a belt 7 which transmits the rotary motion from a pulley 8 connected to the driving shaft 5 to a pulley 9 connected to the driven shaft 4.

A swinging cradle structure for supporting the trunk to be cut - not represented in the figures - arranged transversely to the saw disc 3, is indicated with 10. Such cradle structure 10 can be displaced with respect to the saw disc 3 between an inoperative receded position and an advanced position for cutting the trunk.

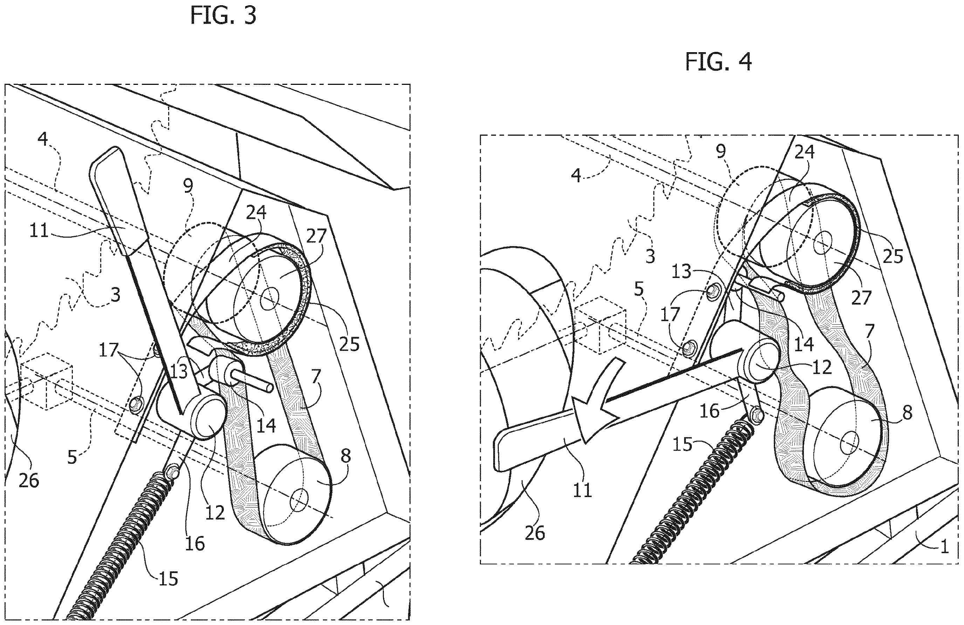

Now, with reference to figures 3 and 4, according to the main characteristic of the invention, the trunk sawing machine is provided with a safety device which comprises a belt tightener 13, 14 that can be actuated manually by means of a lever 11 having a fulcrum 12. A bracket 13 which carries an idler roller 14 which acts against the belt 7, is connected to the lower end of the lever 11.

In figure 3, the lever 11 is in a first operating position of the trunk sawing machine corresponding to the rotation of the saw disc 3, in which the roller 14 is arranged at an advanced position so as to confer to the belt 7 a tension sufficient to transmit, through the friction of the belt 7, the rotary motion of the pulley 8, and thus from the driving shaft 5, to the pulley 9, and hence to the driven shaft 4, driving the saw disc 3 in rotation. The lever 11 is maintained in such first position by a tensioning spring 15 having an end connected to the framework 1 and the end opposite to an end 16 protruding from the pivoted end of the lever 11.

Represented in figure 4 is a configuration in which the safety device was actuated by manually rotating the lever 11 in the anticlockwise so that the roller 14 is arranged in a second belt non-tensioning position 7, disengaging the pulley 9 and thus the driven shaft 4 from the pulley 8 and thus stopping the transmission of the rotation of the saw disc 3.

Figures 3 and 4 show a band brake comprising a strip 24 which partially winds the rotating element 27, constrained at one end to the framework 1 by means of a pair of bolts 17, 17 and preferably carrying - therein - a friction material 25. In figure 3, corresponding - as mentioned - to the first position of the lever 11, the configuration of the strip 24 is such that there is a gap between the friction material and the rotating element 27, so that it can rotate freely.

In figure 4, corresponding to the actuation of the safety device, by rotating around the fulcrum 12, besides loosening the belt 7 thanks to the recession of the roller 14 which interrupts the actuation of the driven shaft 4, the lever 11 transfers - by means of the bracket 13 - a tensioning force to the free end of the strip 24 so that the friction material 25 is pressed by the strip 24 against the rotating element 27, braking the rotary motion thereof up to stopping the saw disc 3.

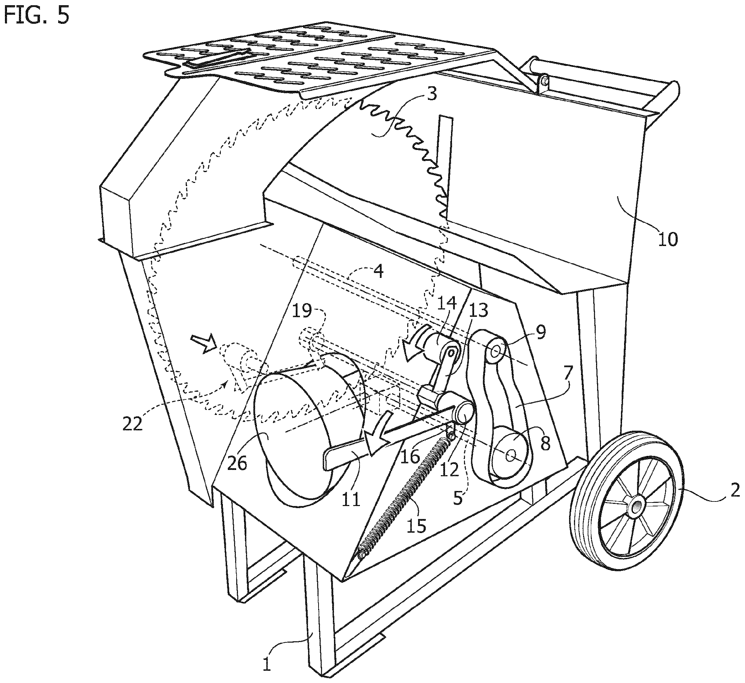

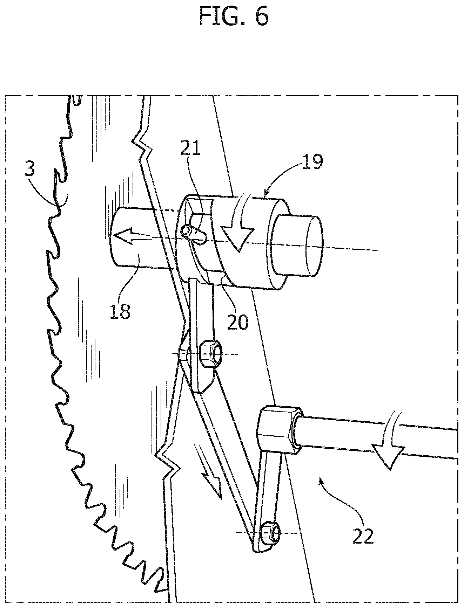

In an embodiment not according to the invention represented in figure 5 and 6 is a variant of the safety device regarding the braking device. The belt tightener 13, 14, suitable to loosen the tension of the belt 7 to disengage the driven shaft 4 from the driving shaft 5, is similar to what is described with reference to the solution described previously.

In this variant, the safety device includes a piston 18 obtained using safety device, displaceable parallel to the rotation axis of the saw disc 3 by means of a cam mechanism 19, 20, 21. Such cam mechanism 19, 20, 21 comprises a cylindrical body 19 for actuating the piston 18 carrying a groove 20 inclined with respect to the axis of the piston 18 slidably constrained in which is a pin 21 protruding from the lateral surface of the piston 18.

The cylindrical body 19 is driven in rotation by the lever 11 by means of a kinematic system 22.

The piston 18 can be displaced between an inoperative receded position, corresponding to the operating configuration of the machine, i.e. with the lever 11 arranged in the first position, and an advanced position in which it presses against the saw disc to brake it, by means of friction, up to stopping it, corresponding to the second position of the lever 11.

The operation of the machine is generally of the conventional type: the operator is required to connect the universal joint coupled with the tractor power take-off, not represented in the figures, to the power take-off 26 of the trunk sawing machine. The universal joint, driven by the tractor power take-off, will transfer the rotary motion to the driving shaft 5, to the belt drive 7, 8, 9, to the driven shaft 4 and lastly to the saw disc 3.

In light of the above, it will be clear that the invention provides a safety device suitable to stop, if need be, the saw disc 3 of a trunk sawing machine irrespective of the rotary motion of the motor-driven universal joint without wearing out the sensitive parts of the trunk sawing machine such as the drive belt 7.

Obviously, the construction details and the embodiments may widely vary with respect to what has been described and illustrated, without departing from the scope of protection of the present invention as defined in the claim that follows.

## Claims

1. A trunk sawing machine comprising a support (1), a rotary saw disc (3), a driven shaft (4) for actuating the disc (3) actuated by means of a belt drive (7, 8, 9) from a motor-driven driving shaft (5), comprising:
a manually actuatable safety device to disengage said driven shaft (4) from said motor-driven driving shaft (5) and simultaneously brake said disc (3), said safety device comprising:
a belt tightener (13, 14) which can be moved by means of a lever (11) of the trunk sawing machine between a belt tensioning advanced position (7), wherein said driven shaft (4) is driven in rotation by said driving shaft (5), and a belt non-tensioning receded position (7), wherein such actuation of the driven shaft (4) is stopped,
a band brake provided to brake said driven shaft (4), and comprising a strip (24), a rotating element (27) and a friction material (25), said band brake being actuatable by means of said lever (11),
**characterised in that**:
said lever (11), in said belt non-tensioning receded position (7) transfers, by means of a bracket (13) fixed to a lower end of said lever (11), a tensioning force to the free end of the strip (24) so that the friction material (25) is pressed by the strip (24) against the rotating element (27).

## Patentansprüche

1. Stamm-Sägemaschine, umfassend eine Stütze (1), eine Drehsägescheibe (3), eine Abtriebswelle (4) zum Bewegen der Scheibe (3), bewegt mittels eines Riemenantriebes (7, 8, 9) von einer von einem Motor angetriebenen Antriebswelle (5) aus, umfassend:
eine manuell betätigbare Sicherheitsvorrichtung, um die Abtriebswelle (4) von der von einem Motor angetriebenen Antriebswelle (5) zu lösen und gleichzeitig die Scheibe (3) zu bremsen, wobei die Sicherheitsvorrichtung umfasst:
einen Riemenspanner (13, 14), der mittels eines Hebels (11) der Stamm-Sägemaschine bewegt werden kann zwischen einer vorgerückten Stellung (7), in der der Riemen gespannt ist, wobei die Abtriebswelle (4) in einer Drehbewegung durch die Antriebswelle (5) angetrieben wird, und einer zurückgezogenen Stellung (7), in der der Riemen nicht gespannt ist, wobei ein solches Bewegen der Abtriebswelle (4) gestoppt ist,
eine Bandbremse, vorgesehen, um die Abtriebswelle (4) zu bremsen, und umfassend einen Streifen (24), ein Drehelement (27) und ein Reibungsmaterial (25), wobei die Bandbremse mittels des Hebels (11) betätigbar ist,
**dadurch gekennzeichnet, dass**:
der Hebel (11) in der zurückgezogenen Stellung (7), in der der Riemen nicht gespannt ist, mittels eines an einem unteren Ende des Hebels (11) befestigten Armes (13) eine Spannkraft auf das freie Ende des Streifens (24) überträgt, so dass das Reibungsmaterial (25) durch den Streifen (24) gegen das Drehelement (27) gedrückt wird.

## Revendications

1. Machine à scier les troncs comprenant un support (1), un disque de scie rotatif (3), un arbre entraîné (4) pour actionner le disque (3) actionné au moyen d'un entraînement par courroie (7, 8, 9) à partir d'un arbre d'entraînement entraîné par moteur (5), comprenant:
un dispositif de sécurité pouvant être actionné manuellement pour libérer ledit arbre entraîné (4) dudit arbre d'entraînement entraîné par moteur (5) et freiner simultanément ledit disque (3), ledit dispositif de sécurité comprenant:
un tendeur de courroie (13, 14) qui peut être déplacé au moyen d'un levier (11) de la machine à scier les troncs entre une position avancée de tension de courroie (7), dans laquelle ledit arbre entraîné (4) est entraîné en rotation par ledit arbre d'entraînement (5), et une position reculée sans tension de courroie (7), dans laquelle un tel actionnement de l'arbre entraîné (4) est arrêté,
un frein à bande prévu pour freiner ledit arbre entraîné (4), et comprenant un ruban (24), un élément rotatif (27) et un matériau de friction (25), ledit frein à bande pouvant être actionné au moyen dudit levier (11),
**caractérisée en ce que**:
ledit levier (11), dans ladite position reculée sans tension de courroie (7), transfère, au moyen d'un bras (13) fixé à une extrémité inférieure dudit levier (11), une force de tension à l'extrémité libre du ruban (24) de sorte que le matériau de friction (25) est pressé par le ruban (24) contre l'élément rotatif (27).
